# EUROPEAN PATENT SPECIFICATION

(11) **EP 4 198 919 B1**
(45) Date of publication and mention of the grant of the patent: **27.08.2025**
(21) Application number: 21214262.4
(22) Date of filing: 14.12.2021
(51) Int. Cl.: G06V 20/56

(54) **METHOD AND DEVICE FOR DETECTING A CONSTRUCTION SITE FOR AN AUTOMATED VEHICLE**
VERFAHREN UND VORRICHTUNG ZUR ERKENNUNG EINER BAUSTELLE FÜR EIN AUTOMATISIERTES FAHRZEUG
PROCÉDÉ ET DISPOSITIF DE DÉTECTION D'UN SITE DE CONSTRUCTION POUR UN VÉHICULE AUTOMATISÉ

(43) Date of publication of application: 21.06.2023
(73) Proprietor: Bayerische Motoren Werke Aktiengesellschaft, 80809 München (DE)
(72) Inventor: Bilra, Manjeet Singh, 85457 Hörlkofen (Wörth) (DE); Abdelhameed, Mohamed-Saad, 85221 Dachau (DE)

(56) References cited:
- EP-B1- 2 984 642
- US-A1- 2009 169 055
- US-A1- 2020 193 823
- US-B1- 9 056 395

## Description

The present invention is directed to a method for detecting a road construction site for an automated vehicle, and a data processing system, e.g., a control unit, being configured to carry out the method. An automated vehicle comprising the data processing system may be provided. Additionally or alternatively, a computer program may be provided, the computer program comprising instructions which, when the program is executed by a computer, e.g., the data processing system, cause the computer to carry out the method at least partly. Additionally or alternatively, a computer-readable medium may be provided, the computer-readable medium comprising instructions which, when executed by a computer, cause the computer to carry out the method at least partly.

In automated, especially autonomous, driving detecting road construction sites online/during driving, optionally in real time, plays a pivotal role for higher level of automation.

Road construction sites may not be supported by near-future highly automated driving systems. Therefore, an online detection of such situations, preferably well in advance, is necessary to hand over control to the driver of the vehicle in time.

In US 11170237 B2 a method for determining a road construction site for a motor vehicle, with which a sensor system and a communications interface are associated, which includes: providing a first measurement signal of the sensor system, representing a sign of a first speed limit for the motor vehicle, and determining a location-related actual speed identification according to the first measurement signal. The method also includes providing mapped data including information relating to a location-related local speed limit and detecting a road construction site according to the actual speed identification and the mapped data.

However, in current systems the information is not updated in real time to either a map data or a backend of the map data so that it could be updated in real time to the vehicle.

US 9 056 395 B1 describes a computing device configured to receive a 3D point cloud of a vicinity of a road on which a vehicle is travelling. The 3D point cloud includes points corresponding to light reflected from objects in the vicinity of the road. The computing device is configured to determine a set of points representing an area at a given height from a surface of the road, and estimate a shape associated with the set of points. Further, the computing device is configured to determine a likelihood that the set of points represents a construction zone sign, based on the estimated shape. Based on the likelihood, the computing device is configured to modify a control strategy associated with a driving behavior of the vehicle, and control the vehicle based on the modified control strategy.

US 2009/169055 A1 describes a feature information collecting device which includes a first unit that performs image recognition processing of a feature included in image information in a surrounding area of a vehicle, a second unit that obtains construction information including information of a construction section, a third unit that determines, when the vehicle travels a section of a road corresponding to a construction section according to the already stored construction information, completion of construction indicated by the construction information, and a fourth unit that causes the first unit to perform image recognition processing of a feature in a construction section according to the construction information when the completion of construction is determined, and that generates, based on an image recognition result thereof and the vehicle position information, learned feature information including position information and attribute information of an image-recognized feature.

US 2020/193823 A1 describes a computer-implemented method for validating the existence of roadwork, comprising, e.g., retrieving information for at least one segment of a road captured by a plurality of vehicles. The information comprises at least two of lane marking data, speed funnel presence data, and traffic behavior change data. The method also comprises generating a confidence score based on analysis of the retrieved information, and validating the existence of the roadwork on the at least one segment of the road based on the generated confidence score.

In light of this prior art, one object of the present invention is to provide a device and/or a method being suitable for overcoming at least the above-mentioned disadvantages of the prior art, respectively.

The object is solved by the features of the independent claim. The dependent claims have preferred further embodiments of the invention as their subject matter.

More specifically, the object is solved by a method for detecting a road construction site for an automated vehicle. The method comprises receiving information about a drivable free space in an environment of the vehicle, receiving information about a number of predefined construction site objects detected in the environment of the vehicle, and determining a presence of the construction site based on the information about the drivable free space and the information about a number of predefined construction site objects.

A road construction site or work zone, e.g., roadworks, occur inter alia when part of the road, or in rare cases, the entire road, has to be occupied for work relating to the road, most often in the case of road surface repairs. Road construction site could also mean any work conducted in close proximity of the road/travel way (thoroughfare) such as utility work or work on power lines (i.e., telephone poles). Road construction sites can, however, also be present when an accident occurs, and the road needs to be cleared.

Roadworks are signposted using the predefined construction site objects. The predefined construction site objects may include (temporary) traffic signs, cones, barriers (e.g., barrier boards), (e.g., T-top) bollards, beacons, barrels as well as other forms of warning devices. Normally, there are standards of temporary traffic control (maintenance of traffic) established in each country for various type of road work.

The drivable free space is a region, which is a road surface, in an area in front or around the vehicle which is free from obstacles. The drivable free space may be the region being suitable trajectory planning.

For detecting the drivable free space and/or the number of predefined construction site objects an on-board sensor system of the automated vehicle may be used. The sensor system may comprise a radar sensor, a LIDAR sensor, an ultrasound sensor, and/or a camera. Sensor data fusion may be used. The detection of the drivable free space and/or the number of predefined construction site objects may be based on algorithm using artificial intelligence and/or a deterministic algorithm.

That is, the above described method uses as input for determining if a road construction site is present in the environment of the vehicle, e.g., 100 meter or 50 meter ahead of the vehicle, he information about the drivable free space together with the number of detected predefined construction site object and thus relies on two different inputs increasing the reliability of the method and providing a solution being independent from the map.

This crosschecking or double checking may leverage the reliability of the construction site detection with the above-described method such that ASIL integrity/conformity can be provided.

Here ASIL is the Automotive Safety Integrity Level which is a risk classification scheme defined by the ISO 26262 - Functional Safety for Road Vehicles standard. This is an adaptation of the Safety Integrity Level (SIL) used in IEC 61508 for the automotive industry. This classification helps defining the safety requirements necessary to be in line with the ISO 26262 standard. The ASIL is established by performing a risk analysis of a potential hazard by looking at the Severity, Exposure and Controllability of the vehicle operating scenario. The safety goal for that hazard in turn carries the ASIL requirements.

There are four ASILs (i.e., ASIL level) identified by the standard: ASIL A, ASIL B, ASIL C, ASIL D. ASIL D dictates the highest integrity requirements on the product and ASIL A the lowest. Hazards that are identified as QM do not dictate any safety requirements.

In the following, preferred implementations of the method are described in detail.

The presence of the construction site may be determined when the number of predefined construction site objects is equal to or exceeds a predefined threshold.

Taking into account the number of the detected predefined construction site objects may further leverage the reliability of the construction site detection with the above-described method such that ASIL integrity/conformity can be provided.

The method may further comprise determining the number of the predefined construction site objects using sensor data corresponding to a predefined area around an outer boarder of the drivable free space.

That is, it may be assumed that the predefined construction site objects are located on the outer boarder of the drivable free space. The method may also include determining the number of predefined construction site objects using an object detection algorithm based on sensor data captured by a sensor system of the vehicle. Assuming that the objects are located on the outer boarder of the drivable free space can reduce a computing power needed for detecting the predefined construction site objects and thus for determining the number of the predefined construction site objects. More specifically, only a part of the sensor data related to an area around the outer boarder of the drivable free space must be analyzed by an object detection algorithm to check if at least one predefined construction site object is present there.

The method may further comprise receiving information about a lane color in the environment of the vehicle and determining the presence of the construction site also based on the lane color.

In some countries, where lanes must be altered so as to accommodate the road construction site, new lanes or interim lanes are marked with a different color and take precedence over the previous lanes. In Germany, Poland and many other European countries, the lane color of the interim lanes is yellow; in Switzerland and in Ireland, the lane color of the interim lanes is orange. Taking into account the lane color may further leverage the reliability of the construction site detection with the above-described method such that ASIL integrity/conformity can be provided.

The method may further comprise receiving map information about the environment of the vehicle including information about the construction site and determining the presence of the construction site also based on the map information.

Taking into account the map information/map data may further leverage the reliability of the construction site detection with the above-described method such that ASIL integrity/conformity can be provided.

The method may further comprise deactivating an automated driving function if the presence of the construction site is determined.

The above described may be summarized in other words and with respect to one solely exemplary implementation thereof as follows.

Data from a high-definition map may be collected and checked regularly, e.g., every few milliseconds, and backend data of the high-definition map data may also be updated regularly, i.e., at least twice a day to include any changes like construction at a road or lane thereof and/or closure of a road or lane thereof.

However, since the backend information are solely updated twice a day and/or might not be complete, an online detection of the road construction site is carried out using on-board sensors. information

More specifically, a sensor system installed at the vehicle comprising at least one camera, optionally a surround view camera system, may provide information about construction site attributes such as cones, beacons, barrels and/or barriers, and about a drivable area.

Every time when a specific number of construction site attributes within a given range/distance, e.g., within 25m up to 75m, in front of the vehicle, is detected, it is assumed that a road construction site is present. In other words, in case the construction site attributes such as cones are detected using the sensor data, i.e., 'X' number of cones correctly detected in front of the vehicle within 'Y' meter, and this information matches with the detected drivable area, it is assumed that a construction site is present. Here, 'Y' meter could be assumed as 50m in front of automated/ego Vehicle.

This information is compared to/double checked with the high-definition map. If the construction site is also included in the high-definition map, i.e., the online information is matching to the map information, the vehicle will drive a trajectory determined using the high-definition map. If the construction site is not included in the high-definition map, the vehicle determines a trajectory solely based on the sensor data and/or gives the control of the vehicle to the driver. Especially in case of highly automated vehicles (L3 to L5), the driver may be informed immediately to take full control of the vehicle and the automated functions may be deactivated.

The driver takes control of the vehicle and drives until the construction site is past. After passing the construction site, i.e., after reaching normal surrounding conditions, the automated driving, optionally the highly autonomous driving mode, can be activated again.

Furthermore, a data processing system may be provided. The data processing system comprises means for carrying out the above-described method at least partly.

The data processing system can be a control unit, optionally an electronic control unit (ECU), for a vehicle. The (electronic) control unit can be an intelligent processor-controlled unit that can communicate with other modules, optionally via a central gateway (CGW). The control unit can form part of the vehicle's onboard network via fieldbuses such as the CAN bus, LIN bus, MOST bus and/or FlexRay or via automotive Ethernet, optionally together with a telematics control unit. The electronic control unit may be configured to control functions relevant to a driving behavior of the vehicle, such as an engine control system, a power transmission, a braking system and/or a tire pressure control system. In addition, some or all driver assistance systems such as parking assistant, adaptive cruise control, lane departure warning, lane change assistant, traffic sign recognition, light signal recognition, approach assistant, night vision assistant, intersection assistant, and/or many others may be controlled by the control unit.

Moreover, the description given above with respect to the method applies mutatis mutandis to the data processing system and vice versa.

Furthermore, an automated vehicle comprising the above-described data processing system may be provided.

The automated vehicle may be an automobile. The automated vehicle can be designed to take over lateral and/or longitudinal guidance at least partially and/or temporarily during automated driving of the automated vehicle.

The automated driving may be such that the driving of the vehicle is (largely) autonomous.

The vehicle may be a vehicle of autonomy level 1, i.e., have certain driver assistance systems that support the driver in vehicle operation, for example adaptive cruise control (ACC).

The vehicle can be a vehicle of autonomy level 2, i.e., be partially automated in such a way that functions such as automatic parking, lane keeping or lateral guidance, general longitudinal guidance, acceleration and/or braking are performed by driver assistance systems.

The vehicle may be an autonomy level 3 vehicle, i.e., automated in such a conditional manner that the driver does not need to continuously monitor the system vehicle. The motor vehicle autonomously performs functions such as triggering the turn signal, changing lanes, and/or lane keeping. The driver can attend to other matters but is prompted by the system to take over control within a warning time if needed.

The vehicle may be an autonomy level 4 motor vehicle, i.e., so highly automated that the driving of the vehicle is permanently taken over by the system vehicle. If the driving tasks are no longer handled by the system, the driver may be requested to take over control.

The vehicle may be an autonomy level 5 vehicle, i.e., so fully automated that the driver is not required to complete the driving task. No human intervention is required other than setting the destination and starting the system. The vehicle can operate without a steering wheel or pedals.

Moreover, the description given above with respect to the method and the data processing system applies mutatis mutandis to the vehicle and vice versa.

Furthermore, a computer program may be provided, the computer program comprising instructions which, when the program is executed by a computer, cause the computer to carry out the above-described method at least partly.

The program may comprise any program code, in particular a code suitable for control systems of vehicles. The description given above with respect to the method, the data processing system and the vehicle applies mutatis mutandis to the computer program and vice versa.

Furthermore, computer-readable medium may be provided, the computer-readable medium comprising instructions which, when executed by a computer, cause the computer to carry out the above-described method at least partly.

The computer-readable medium may be any digital data storage device, such as a USB flash drive, a hard disk, a CD-ROM, an SD card, or an SSD card. The above-described computer program may be stored on the computer-readable medium. However, the computer program does not necessarily have to be stored on such a computer-readable medium but can also be obtained via the Internet.

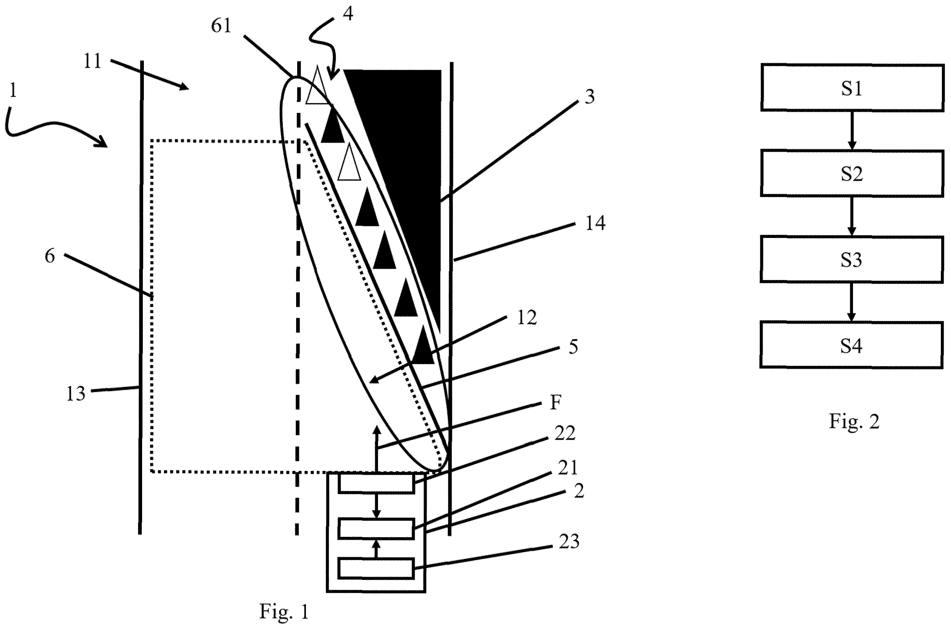

An embodiment is described with reference to figures 1 and 2 below.
- Fig. 1: shows schematically an automated vehicle comprising a control unit configured to carry out a method for detecting a construction site in an environment of the automated vehicle, and
- Fig. 2: shows schematically a flowchart of the method.

In the following an embodiment is described with reference to figures 1 and 2, wherein the same reference signs are used for the same objects throughout the description of the figures and wherein the embodiment is just one specific example for implementing the invention and does not limit the scope of the invention as defined by the claims.

In figure 1 a road 1 with two driving lanes 11, 12 is shown in a top view, wherein an automated or ego vehicle 2 is driving on a right one of the two lanes 12 in a direction F towards a road construction site 3 also being located on the right one of the two lanes 12 in front of the automated vehicle 2.

The construction site 3 comprises pylons 4 and an intermediate yellow lane marking 5, wherein both are provided between the automated vehicle 2 and the construction site 3.

The automated vehicle 2 comprises a control unit 21 which is a data processing system, a sensor system 22 comprising inter alia a camera configured to capture images from the environment in front of the automated vehicle 2 and a GPS sensor, and a storage unit 23 storing map data of an environment of the automated vehicle 2.

The automated vehicle 2, which is currently driving using automated driving functions, such as longitudinal and/or lateral guidance of the vehicle 2, is configured to carry out a method for detecting the construction site 3, as will be explained in detail below also with reference to figure 2 showing a flowchart of the method.

As can be gathered from figure 2, the method comprises substantially four steps S1 - S4.

In a first step S1 of the method, the sensor system 22 captures at least one image from the environment in front of the vehicle 2 and outputs the image data corresponding to the captured at least one image to a (not shown) data processing system of the sensor system 22. The data processing system of the sensor system 22 determines, optionally inter alia, based on the received image data a drivable free space 6 in the environment in front of the automated vehicle 2. As can be gathered from figure 1, the drivable free space 6 is limited by lane markings 13, 14 of the road 1 and the intermediate lane marking 5 of the construction site 3. The drivable free space 6 is thus an area/a region in the driving direction F ahead/in front of the vehicle 1 without obstacles on the road 1. Moreover, the data processing system detects the intermediate lane 5 and determines a color, here yellow, thereof using the image data. Furthermore, the data processing system of the sensor system 22 uses a part of the received image data to detect the pylons 4 of the construction site 3, wherein this part corresponds to an outer boarder of the drivable free space 6, preferably only in the region where the intermediate yellow lane marking 5 was detected. More specifically, the method comprises determining the number of the predefined construction site objects 4 using the image data corresponding to a predefined area 61 around the outer boarder of the drivable free space 6 where the yellow lane marking 5 is located. As can be gathered from figure 1, the data processing system only detects five out seven pylons 4. Also, in the first step S1 of the method, the GPS sensor of the sensor system 22 determines an actual position of the automated vehicle 2. The actual position, the drivable free space 6 (i.e., the information where this space 6 is located), the number of detected pylons 4 (here five) and the color of the detected lane 5 (here yellow) is output to the control unit 21 of the automated vehicle 2.

In a second step S2 of the method, the control unit 22 receives the information about the drivable free space 6, the number of detected predefined construction site objects, here the pylons 4, the color of the lane marking 5 (here yellow), and the actual position of the automated vehicle 2.

In a third step S3 of the method, the control unit 22 determines based on the information received in the second step S2 if the road construction site 3 is present in the environment of the automated vehicle 2.

More specifically, the information about the drivable free space 6 here indicates that the lane 12 on which the automated vehicle 2 is currently driving is blocked in front of the vehicle. This is a first indicator that there is the construction site 3. However, the information about the drivable free space 6 does not comprise an information why the lane 12 is blocked. The information about the lane color, which is yellow here for the intermediate lane 5, is a second indicator that there is the construction site 3. Moreover, the number of the detected pylons 4 is compared to a predefined threshold, e.g., four, and it is determined if the number exceeds or is equal to the predefined threshold. This is a third indicator that there is the construction site 3. Furthermore, the control unit 22 uses map data, e.g., of a high-definition map, stored in the data storage 23 together with the received actual position of the automated vehicle 2. In the map data there is no information about the road construction site 3. This is an indicator that there is no road construction site in front of the vehicle 2. However, since the other three indicators where true, the control unit 2 determines that the construction site 3 is present in front of the vehicle 2.

In a fourth step S4 of the method, the control unit outputs a control signal based on the information that the road construction site 3 is present in front of the automated vehicle 2 to the vehicle 2 such that a takeover request is output to the driver of the vehicle 2 and the automated driving function of the vehicle 2 is deactivated, preferably after the driver has taken over control of the vehicle 2..

### Reference Signs

- 1: road
- 11: left lane of road
- 12: right lane of road
- 13: left outer lane marking of road
- 14: right outer lane marking of road
- 2: automated vehicle
- 21: control unit
- 22: sensor system
- 23: storage for map data
- 3: road construction site
- 4: predefined construction site object, here pylons
- 5: intermediate lane marking for road construction site
- 6: drivable free space
- 61: predefined area around an outer boarder of the drivable free space
- F: current driving direction
- S1 - S4: method steps

## Claims

1. Computer implemented method for detecting a road construction site (3) for an automated vehicle (2), the method comprising:
- receiving (S2) information about a drivable free space (6) in an environment of the vehicle (2), wherein the drivable free space (6) is a region, which is a road surface, in an area in front or around the vehicle which is free from obstacles,
- receiving (S2) information about a number of predefined construction site objects (4) detected in the environment of the vehicle (2), and
- determining (S3) a presence of the road construction site (3) based on the information about the drivable free space (6) and the information about the number of the predefined construction site objects (4).

2. Method according to claim 1, wherein the presence of the road construction site (3) is determined when the number of the predefined construction site objects (4) is equal to or exceeds a predefined threshold.

3. Method according to claim 1 or 2, wherein the method further comprises determining (S1) the number of the predefined construction site objects (4) using sensor data corresponding to a predefined area around an outer boarder of the drivable free space (6).

4. Method according to any of claims 1 to 3, wherein the method further comprises:
- receiving (S2) information about a lane color in the environment of the automated vehicle (2), and
- determining (S3) the presence of the road construction site (3) also based on the lane color.

5. Method according to any of claims 1 to 4, wherein the method further comprises:
- receiving (S2) map information about the environment of the automated vehicle (2) including information about the road construction site (3), and
- determining (S3) the presence of the road construction site (3) also based on the map information.

6. Method according to any of claims 1 to 5, wherein the method further comprises deactivating (S4) an automated driving function of the automated vehicle (2) if the presence of the road construction site (3) is determined.

7. A data processing system comprising means (21, 22, 23) for carrying out the method according to any of claims 1 to 6.

8. An automated vehicle (2) comprising the data processing system according to claim 7.

9. A computer program comprising instructions which, when the program is executed by a computer, cause the computer to carry out the method according to any of claims 1 to 6.

10. A computer-readable medium comprising instructions which, when executed by a computer, cause the computer to carry out the method according to any of claims 1 to 6.

## Patentansprüche

1. Computerimplementiertes Verfahren zum Erkennen einer Straßenbaustelle (3) für ein automatisiertes Fahrzeug (2), wobei das Verfahren umfasst:
• Empfangen (S2) von Informationen über einen befahrbaren Freiraum (6) in einer Umgebung des Fahrzeugs (2), wobei der befahrbare Freiraum (6) ein Bereich ist, der eine Straßenoberfläche ist, in einem Gebiet vor oder um das Fahrzeug, das frei von Hindernissen ist,
• Empfangen (S2) von Informationen über eine Anzahl von vordefinierten Baustellenobjekten (4), die in der Umgebung des Fahrzeugs (2) erkannt wurden, und
• Bestimmen (S3) eines Vorhandenseins der Straßenbaustelle (3) basierend auf den Informationen über den befahrbaren Freiraum (6) und den Informationen über die Anzahl der vordefinierten Baustellenobjekte (4).

2. Verfahren nach Anspruch 1, wobei das Vorhandensein der Straßenbaustelle (3) bestimmt wird, wenn die Anzahl der vordefinierten Baustellenobjekte (4) gleich oder größer als ein vordefinierter Schwellenwert ist.

3. Verfahren nach Anspruch 1 oder 2, wobei das Verfahren ferner das Bestimmen (S1) der Anzahl der vordefinierten Baustellenobjekte (4) unter Verwendung von Sensordaten umfasst, die einem vordefinierten Bereich um eine äußere Grenze des befahrbaren Freiraums (6) entsprechen.

4. Verfahren nach einem der Ansprüche 1 bis 3, wobei das Verfahren ferner umfasst:
• Empfangen (S2) von Informationen über eine Fahrbahnfarbe in der Umgebung des automatisierten Fahrzeugs (2), und
• Bestimmen (S3) des Vorhandenseins der Straßenbaustelle (3) auch basierend auf der Fahrbahnfarbe.

5. Verfahren nach einem der Ansprüche 1 bis 4, wobei das Verfahren ferner umfasst:
• Empfangen (S2) von Karteninformationen über die Umgebung des automatisierten Fahrzeugs (2), einschließlich Informationen über die Straßenbaustelle (3), und
• Bestimmen (S3) des Vorhandenseins der Straßenbaustelle (3) auch basierend auf den Karteninformationen.

6. Verfahren nach einem der Ansprüche 1 bis 5, wobei das Verfahren ferner das Deaktivieren (S4) einer automatisierten Fahrfunktion des automatisierten Fahrzeugs (2) umfasst, wenn das Vorhandensein der Straßenbaustelle (3) bestimmt wird.

7. Datenverarbeitungssystem, umfassend Mittel (21, 22, 23) zum Durchführen des Verfahrens einem der Ansprüche 1 bis 6.

8. Automatisiertes Fahrzeug (2), umfassend das Datenverarbeitungssystem nach Anspruch 7.

9. Computerprogramm, umfassend Anweisungen, die, wenn das Programm von einem Computer ausgeführt wird, den Computer veranlassen, das Verfahren nach einem der Ansprüche 1 bis 6 durchzuführen.

10. Computerlesbares Medium, umfassend Anweisungen, die, wenn sie von einem Computer ausgeführt werden, den Computer veranlassen, das Verfahren nach einem der Ansprüche 1 bis 6 durchzuführen.

## Revendications

1. Procédé mis en œuvre par ordinateur pour détecter un chantier routier (3) pour un véhicule automatisé (2), le procédé comprenant :
• la réception (S2) d'informations sur un espace libre praticable (6) dans un environnement du véhicule (2), où l'espace libre praticable (6) est une région, qui est une surface de route, dans une zone devant ou autour du véhicule qui est libre d'obstacles,
• la réception (S2) d'informations sur un nombre d'objets de chantier prédéfinis (4) détectés dans l'environnement du véhicule (2), et
• la détermination (S3) d'une présence du chantier routier (3) sur la base des informations sur l'espace libre praticable (6) et des informations sur le nombre d'objets de chantier prédéfinis (4).

2. Procédé selon la revendication 1, dans lequel la présence du chantier routier (3) est déterminée lorsque le nombre d'objets de chantier prédéfinis (4) est égal ou supérieur à un seuil prédéfini.

3. Procédé selon la revendication 1 ou 2, dans lequel le procédé comprend en outre la détermination (S1) du nombre d'objets de chantier prédéfinis (4) en utilisant des données de capteur correspondant à une zone prédéfinie autour d'une bordure extérieure de l'espace libre praticable (6).

4. Procédé selon l'une quelconque des revendications 1 à 3, dans lequel le procédé comprend en outre :
• la réception (S2) d'informations sur une couleur de voie dans l'environnement du véhicule automatisé (2), et
• la détermination (S3) de la présence du chantier routier (3) également sur la base de la couleur de voie.

5. Procédé selon l'une quelconque des revendications 1 à 4, dans lequel le procédé comprend en outre :
• la réception (S2) d'informations cartographiques sur l'environnement du véhicule automatisé (2) incluant des informations sur le chantier routier (3), et
• la détermination (S3) de la présence du chantier routier (3) également sur la base des informations cartographiques.

6. Procédé selon l'une quelconque des revendications 1 à 5, dans lequel le procédé comprend en outre la désactivation (S4) d'une fonction de conduite automatisée du véhicule automatisé (2) si la présence du chantier routier (3) est déterminée.

7. Système de traitement de données comprenant des moyens (21, 22, 23) pour mettre en œuvre le procédé selon l'une quelconque des revendications 1 à 6.

8. Véhicule automatisé (2) comprenant le système de traitement de données selon la revendication 7.

9. Programme informatique comprenant des instructions qui, lorsque le programme est exécuté par un ordinateur, amènent l'ordinateur à mettre en œuvre le procédé selon l'une quelconque des revendications 1 à 6.

10. Support lisible par ordinateur comprenant des instructions qui, lorsqu'elles sont exécutées par un ordinateur, amènent l'ordinateur à mettre en œuvre le procédé selon l'une quelconque des revendications 1 à 6.
